Europäisches Patentamt

European Patent Office

Office européen des brevets

(11) Veröffentlichungsnummer: **0 233 638**
A2

(12) # EUROPÄISCHE PATENTANMELDUNG

(21) Anmeldenummer: 87102280.2

(22) Anmeldetag: 18.02.87

(51) Int. Cl.³: **H 01 R 13/66**
H 04 B 9/00, H 04 B 11/00

(30) Priorität: 21.02.86 DE 3605627

(43) Veröffentlichungstag der Anmeldung:
26.08.87 Patentblatt 87/35

(84) Benannte Vertragsstaaten:
BE CH DE FR IT LI NL

(71) Anmelder: ELEKTRON-BREMEN Fabrik für
Elektrotechnik GmbH
Hohentorshafen 17-19
D-2800 Bremen(DE)

(72) Erfinder: Sieger, Willi
Wecholder Strasse 64
D-2800 Bremen(DE)

(74) Vertreter: Bolte, Erich, Dipl.-Ing. et al,
c/o Meissner, Bolte & Partner Patentanwälte Hollerallee
73
D-2800 Bremen 1(DE)

(54) Verfahren und Vorrichtung zur Übertragung der Daten einer Spannungsquelle (Batterie) auf eine Datenverarbeitungsanlage.

(57) Verfahren zur Übertragung der Daten einer Spannungsquelle (Batterie) auf eine Datenverarbeitungsanlage, wobei gleichzeitig mit der Herstellung einer elektrischen Verbindung zwischen der Spannungsquelle (Batterie) und einer Speisestation bzw. einer Verbraucherstation die Datenübertragung ermöglicht wird.

Fig. 3

EP 0 233 638 A2

Anmelder:

ELEKTRON-BREMEN
Fabrik für Elektrotechnik GmbH
Hohentorshafen 17 - 19

2800 Bremen

Hans Meissner · Dipl.-Ing. (bis 1980)
Erich Bolte · Dipl.-Ing.*
Friedrich Möller · Dipl.-Ing.

BÜRO MÜNCHEN/MUNICH OFFICE:
Dr. Eugen Popp · Dipl.-Wirtsch.-Ing.*
Wolf E. Sajda · Dipl.-Phys.*
Dr. Johannes Bohnenberger · Dipl.-Ing.
Dr. Claus Reinländer · Dipl.-Ing.*

ANSCHRIFT/ADDRESS:         Telefon: (0421) 342019
Hollerallee 73             Telex: 246157 meibo d
D-2800 Bremen 1            Telefax: (0421) 342296

| Ihr Zeichen<br>Your ref. | Unser Zeichen<br>Our ref. | ELE-3o-EP | Datum<br>Date | 28. Januar 1987 |
|---|---|---|---|---|

Verfahren und Vorrichtung zur Übertragung der
Daten einer Spannungsquelle (Batterie)
auf eine Datenverarbeitungsanlage

B e s c h r e i b u n g :

Die Erfindung betrifft ein Verfahren gemäß dem Oberbegriff des Anspruchs 1 sowie eine Vorrichtung zur Durchführung insbesondere dieses Verfahrens gemäß dem Oberbegriff des Anspruchs 7.

Batterien für elektrisch angetriebene Flurförderfahrzeuge sind einem bestimmten Verbrauchs- und Ladezyklus unterworfen. Üblicherweise wird ein Fahrzeug am Ende seiner Einsatzzeit zu einem Ladegerät gefahren, und dort wird die Fahrzeugbatterie vom Ladegerät aufgeladen. Die elektrische Verbindung während des Ladevorganges erfolgt über ein mehrteiliges Kabel mit einer genormten Steckverbindung. Auf der Fahrzeugseite ist das Kabel an einem Ende fest mit der Batterie verbunden und am anderen Ende mit einem Teil der Steckverbindung versehen. Über ein weiteres Kabelstück vom zweiten Teil der Steckverbindung bis zum Ladegerät wird so die elektrische Verbindung Ladegerät-Fahrzeugbatterie hergestellt.

Zur Ausnutzung der vorhandenen Batterie-Kapazität und zum Erreichen der maximalen Battarie-Lebensdauer ist es von Vorteil, jede Batterie während des Verbrauchszyklus nahezu vollständig, das heißt bis zu 80%, zu entladen und während des darauf folgenden Ladezyklus wieder vollständig aufzuladen. Bei ständig sich ändernden Einsatzbedingungen und bei mit zunehmendem Alter abnehmender Batterie-Kapazität ist es erforderlich, die Batterien zwischen den Fahrzeugen entsprechend auszutauschen bzw. zu wechseln. Voraussetzung dafür ist aber die genaue Kenntnis des Alters jeder Batterie, der Anzahl der jeweiligen Ladezyklen, die jeweilige Ladezeit usw. Die Zuordnung der einzelnen Batterien auf einzelne Fahrzeuge entsprechend den herrschenden Einsatzbedingungen kann über eine Datenverarbeitungsanlage erfolgen. Notwendige Bedingung für eine schnelle und richtige Verarbeitung aller Daten ist aber vor allem eine einwandfreie Übertragung der batterieseitigen Daten, z. B. die Identifizierung jeder Batterie, unabhängig von dem Fahrzeug, in dem sie eingesetzt ist. Bei vorhandenen Systemen ist zu diesem Zweck erforderlich, die an ein Ladegerät angeschlossenen Batterien manuell zu notieren bzw. in eine Datenverarbeitungsanlage einzugeben.

Aufgabe der vorliegenden Erfindung ist es daher, ein Verfahren zu entwickeln, das eine schnelle und kostensparende Verarbeitung der batterieseitigen Daten gestattet.

Weitere Aufgabe der Erfindung ist es, eine Vorrichtug zur Durchführung des genannten Verfahrens bereitzustellen.

Die Aufgabe wird erfindungsgemäß durch die kennzeichnenden Maßnahmen nach Anspruch 1 bzw. 7 gelöst. Durch die gemäß dem Kennzeichen des Anspruchs 1 vorgesehene Datenübertragung zwischen einer Spannungsquelle (Batterie) und einer Speisestation gleichzeitig mit dem Herstellen einer elektrischen Verbindung können batterieseitige Daten, wie z. B. eine Nummer zur Identifizierung der Batterie sofort automatisch registriert und möglicherweise auch weiter verarbeitet werden. Die Datenübertragung kann parallel zur Leistungsübertragung mittels eines weiteren Kabels oder drahtlos erfolgen.

Vorteilhafterweise erfolgt die Datenübertragung kontaktlos, da Steckkontakte, insbesondere in der für die Datenübertragung üblichen Größe, anfällig sind gegen unsachgemäßen Gebrauch und gegen Verschmutzung. Ein weiterer Vorteil ist dabei die galvanische Trennung zwischen der Datenverarbeitungsanlage und der Spannungsquelle (Batterie).

Besonders vorteilhaft ist eine Datenübertragung durch Ultraschall, Funk- oder Lichtwellen, insbesondere Infrarot-Strahlung, z. B. mittels handelsüblicher Bauteile, nämlich einer Infrarot-Leuchtdiode als Sender und einem Fototransistor als Empfänger. Die Datenübertragung durch Infrarot-Strahlung ist selbst bei Verschmutzung der Bauteile auf der Sender- bzw. Empfängerseilte noch möglich und ist außerdem nicht so störungsanfällig wie eine Datenübertragung durch Funkwellen.

Zur Durchführung des Verfahrens gemäß Anspruch 1 ist besonders vorteilhaft eine Steckverbindung gemäß dem Oberbegriff des Anspruchs 7 mit einem am Gehäuse der Steckverbindung angeordneten Datenübertragungsorgan. Dabei weist das Datenübertragungsorgan korrespondierende Teile auf, die jeweils am Gehäuse eines Steckerteils angeordnet sind. Somit ist gewährleistet, daß mit dem Herstellen der Steckverbindung auch eine Datenübertragung erfolgen kann.

Bevorzugte konstruktive Detaillösungen sind in den Unteransprüchen beschrieben.

Nachstehend wird die Erfindung anhand von Ausführungsbeispielen näher erläutert. Es zeigen:

Fig. 1    eine Steckverbindung für ein Kabel zwischen einer Batterie eines elektrisch betriebenen Flurförderfahrzeuges und einem Ladegerät in der Seitenansicht;

Fig. 2    eine Steckverbindung gemäß Fig. 1 in der Draufsicht;

Fig. 3    eine Steckverbindung gemäß Fig. 1 in der Draufsicht, jedoch mit einem am Gehäuse angeordneten Datenübertragungsorgan;

Fig. 4    eine Steckverbindung gemäß Fig. 3 in der Seitenansicht;

Fig. 5    ein Blockschaltbild der Bauteile im Datenübertragungsorgan.

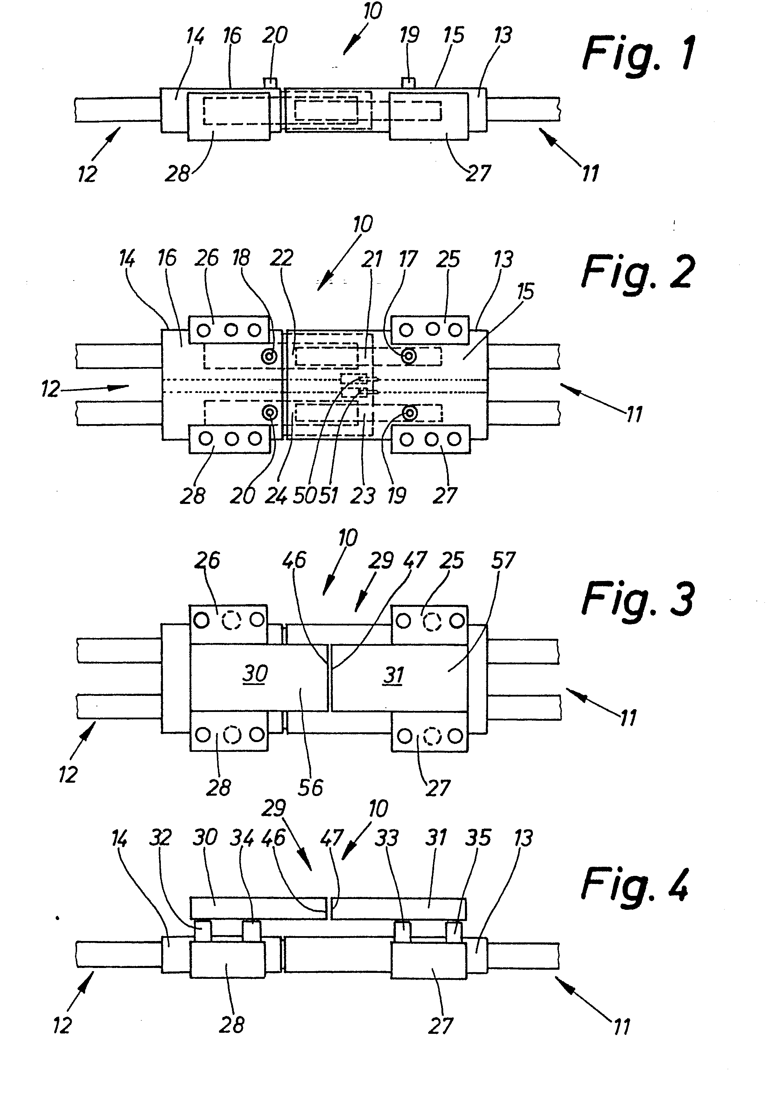

Eine Steckverbindung 10 für ein mehrteiliges Kabel 11, 12 zwischen einer Batterie eines elektrisch betriebenen Flurförderfahrzeuges und einem Ladegerät zeigt die Fig. 1. Derartige Steckverbindungen 10 sind genormt und für mehrere Spannungen, z. B. für 24 Volt, aber auch bis zu 80 Volt erhältlich. Die Steckverbindung 10 besteht aus zwei Gehäuseteilen 13, 14, die ineinanderschiebbar sind. An den Oberseiten 15, 16 der Gehäuseteile 13 bzw. 14 sind je zwei Bohrungen 17, 19 bzw. 18, 20 angeordnet. Die Bohrungen 17...20 sind mit hier nicht gezeigten Bolzen versehen, um innerhalb der Steckverbindung 10 angeordnete Kontakte 21, 23 bzw. 22, 24 festzuklemmen. Die Kontakte 21...24 sind im inneren der Gehäuseteile 13, 14 mit dem Kabel 11, 12 verbunden. Bei geschlossener Steckverbindung 10 (Fig. 1 - 4) ist ein Teil des Gehäuseteils 14 in das Gehäuseteil 13 hineingeschoben, und ebenso sind die stiftartig ausgebildeten Kontakte 21, 23 in die hohl ausgebildeten Kontakte 22, 24 hineingeschoben. Die jeweils ineinandergeschobenen Bauteile sind in den Fig. 1, 2 schraffiert gezeichnet. Außen an den Gehäuseteilen 13, 14 sind je zwei Schraubflansche 25, 27 bzw. 26, 28 angeordnet. Die Schraubflansche 25...28 sind mit jeweils drei Bohrungen versehen. Zur besseren Handhabbarkeit (hier jedoch nicht gezeigt) ist üblicherweise ein U-förmig ausgebildeter und gekröpfter Handgriff über die jeweils äußeren Bohrungen zweier Schraubflansche (z. B. 25, 27) mit dem Gehäuseteil 13 verbunden.

Fig. 3 zeigt eine Steckverbindung 10 mit einem auf den Oberseiten 15, 16 der Gehäuseteile 13, 14 angeordneten Datenübertragungsorgan 29, welches auf der Empfängerseite aus einem Empfangsmodul 30 und auf der Senderseite aus einem Codierungsmodul 31 besteht. Das Codierungsmodul 31 ist am batterieseitigen Gehäuseteil 13 der Steckverbindung 10 innerhalb eines Sendergehäuses 57 angeordnet. Das Empfangsmodul 30 ist an dem einem Ladegerät zugewandten Gehäuseteil 14 innerhalb eines Empfangsgehäuses 56 angeordnet. Das Kabel 11 ist üblicherweise mit einer hier nicht gezeigten Batterie fest verbunden, so daß indirekt über das Gehäuseteil 13 und das Kabel 11 eine feste Verbindung zwischen dem Codierungsmodul 31 und der Batterie während der gesamten Batterielebensdauer besteht. Das Empfangsmodul 30 und das Codierungsmodul 31 sind über jeweils vier Distanzhülsen (von denen nur jeweils zwei 32, 34 bzw. 33, 55 gezeigt sind) mit den Gehäuseteilen 13, 14 verschraubt, vernietet oder dgl. Die Distanzhülsen 30...35 sind erforderlich, da die Bohrungen 17...20 mit ihren Rändern über die Oberseiten 15, 16 der Gehäuseteile 13, 14 hinausragen.

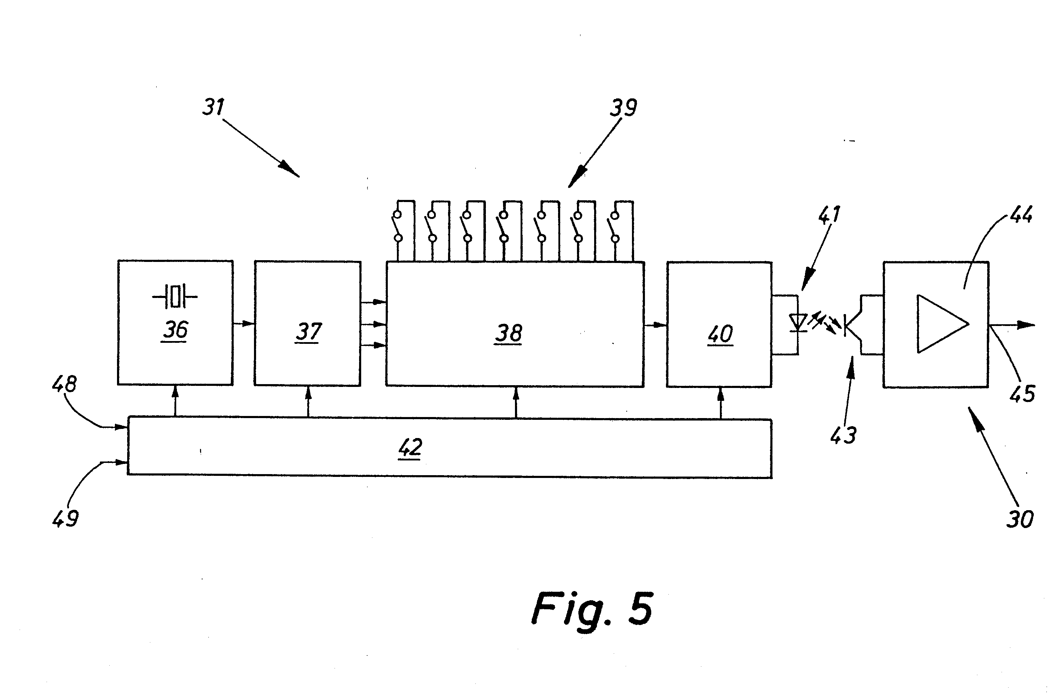

Ein Blockschaltbild der Bauteile im Codierungsmodul 31 sowie im Empfangsmodul 30 zeigt Fig. 5. Ein quarzgesteuerter Oszillator 36 taktet über einen Teiler 37 ein Schieberegister 38. Das Schieberegister 38 ist mit einem Festwertspeicher 39 verbunden, der eine dual codierte Nummer zwischen 0 und 127 enthält. Diese Nummer dient der Identifikation einer bestimmten Batterie, das heißt, daß jeder Batterie eine andere Nummer zugeordnet ist. Der Festwertspeicher 39 kann beispielsweise ein ROM, PROM oder EPROM sein. Am Ausgang des Schieberegisters 38 ist eine Treiberstufe 40 mit einer zugehörigen Infrarot-Leuchtdiode (Infrarot-LED) 41 angeordnet. Das Infrarot-LED 41 ist zugleich Ausgang des Codierungsmoduls 31. Die Energieversorgung des Codierungsmoduls 31 erfolgt über eine Spannungsstabilisierung 42, welche aus der Batterie gespeist wird.

Das Empfangsmodul 30 enthält einen Fototransistor 43 sowie einen Impedanzwandler 44, dessen Ausgang 45 mit einer hier nicht gezeigten Datenleitung verbunden ist. Das Infrarot-LED 41 und der Fototransistor 43 sind jeweils gegenüberliegend an den Stirnflächen 46 bzw. 47, ggf. versenkt, angeordnet.

Die Eingänge 48, 49 der Spannungsstabilisierung 42 sind mit den beiden Anschlüssen des Kabels 11 im Gehäuseteil 13 elektrisch verbunden. Vorzugsweise erfolgt diese Verbindung über die Bohrungen 17 und 19, welche in Fig. 4 von der Distanzhülse 33 verdeckt sind.

Eine Identifizierung der über die Steckverbindung 10 angeschlossenen Batterie bzw. eine Datenübertragung über die Steckverbindung 10 geschieht folgendermaßen:

Das Codierungsmodul 31 ist nur von der Spannungsversorgung der Batterie abhängig und arbeitet infolgedessen ständig. Dabei wird aus dem Festwertspeicher 39 ein 7-Bit breites Datenwort parallel in das Schieberegister 38 geladen. Das Schieberegister 38 wird durch den quarzgesteuerten Oszillator 36 bzw. den Teiler 37 getaktet und übergibt die zuvor parallel eingegebenen 7-Bit breiten Daten seriell über die Treiberstufe 40 an das Infrarot-LED 41. Dabei wird vor jedes 7-Bit breite Datenwort ein Start-Bit gesetzt, so daß die Information, die das Infrarot-LED 41 ausgibt, aus einem 8-Bit breiten seriellen Datenwort besteht. Vorzugsweise beträgt die Impulsbreite der einzelnen Bits eine Millisekunde, mit Ausnahme des Start-Bits, welches eine Impulsbreite von etwa vier Millisekunden aufweist. Die vom Infrarot-LED 41 abgestrahlten Bits werden vom Fototransistor 43 empfangen und über den Impedanzwandler 44 bzw. den Ausgang 45 der weiteren Verarbeitung zugeführt.

Die Bauteile 36...44 des Datenübertragungsorgans 29 gemäß der Darstellung in Fig. 5 sind handelsüblicher Art. Ebenso ist eine Anpassung der einzelnen Bauteile aneinander leicht durchzuführen.

In einem weiteren, hier nicht gezeigten Ausführungsbeispiel, sind die Bauteile 36...40 des Codierungsmoduls 31 und die Spannungsstabilisierung 42 nicht zusammen mit dem Infrarot-LED 41 am Gehäuseteil 13 angeordnet. Das Datenübertragungsorgan 29 enthält somit nur das Infrarot-LED 41 auf der Senderseite und das Empfangsmodul 30 auf der Empfängerseite. Die zuvor genannten Bauteile 36...40 und 42 sind im Batterieblock (Batteriegehäuse) integriert.

In einem anderen Ausführungsbeispiel wird das 8-Bit breite Datenwort nicht ständig vom Infrarot-LED abgegeben, sondern nur auf einen besonderen Impuls hin. Dieser Impuls kann über die in Fig. 2 schraffiert gezeichneten Pilot-Kontakte 50, 51 erfolgen. Zu diesem Zweck ist eine weitere in der Fig. 2 nicht gezeichnete elektrische Verbindung zwischen den Pilot-Kontakten 50, 51 und dem Codierungsmodul 31 vorhanden. Die Pilot-Kontakte 50, 51 sind in Steckverbindungen üblicher Bauart vorhanden und betätigen beim Trennen der Pilot-Kontakte 50, 51 ein Relais im ggf. angeschlossenen Ladegerät, um den Starkstrom, welcher über die Kabel 11 bzw. 12 fließt, zu unterbrechen. Dadurch wird bei einer Trennung der Kontakte 21...24 ohne vorheriges Abschalten des Ladegerätes die Entstehung eines Lichtbogens vermieden. Die Pilot-Kontakte 50, 51 sitzen in durch die Gehäuseteile 13, 14 hindurchgehenden Öffnungen 52, 54 bzw. 53, 55, welche in der Fig. 2 jeweils nur durch eine punktierte Linie angedeutet sind.

In einem anderen, hier nicht gezeigten Ausführungsbeispiel wird die Datenübertragung über phychische Kontake durchgeführt. Das Codierungsmodul 31 und das Empfangsmodul 30 weisen zu diesem Zweck korrespondierende, vorzugsweise ineinandersteckbare Kontakte auf. Sobald die Steckverbindung 10 geschlossen ist, besteht auch eine elektrische Verbindung über die zuvor erwähnten ineinandersteckbaren Kontakte. Die Bauteile entsprechen denen der zuvor beschriebenen Ausführungsbeispiele. Das Empfangsmodul 30 beinhaltet jedoch keinen Phototransistor 43 und keinen Impedanzwandler 44 mehr, sondern besteht nur noch aus einem Stecker mit einer angeschlossenen Datenleitung. Ebenso weist das Codierungsmodul 31 kein Infrarot-LED 41 mit der zugehörigen Treiberstufe 40 auf. Werden die Daten, wie zuvor beschrieben, seriell übertragen, so sind insgesamt jeweils zwei ineinandersteckbare Kontakte auf der Sender- und der Empfängerseite vorgesehen.

In einer Abwandlung des zuletzt beschriebenen Ausführungsbeispiels erfolgt die Spannungsversorgung des Codierungsmoduls nicht über die Batterie, sondern über eine an das Empfangsmodul angeschlossene Datenleitung. Die Anzahl der Kontakte auf der Sender- bzw. der Empfängerseite erhöht sich dadurch auf jeweils vier. Durch die Spannungsversorgung über die Datenleitung sind das Codierungsmodul sowie die Datenübertragung unabhängig von Spannungsschwankungen bzw. Spannungsspitzen zwischen der Batterie und einem über die Steckverbindung 10 angeschlossenen Ladegerät.

Meissner & Bolte

MEISSNER, BOLTE & PARTNER

**0233638**

Patentanwälte · European Patent Attorneys*
Bremen · München

Anmelder:

ELEKTRON-BREMEN
Fabrik für Elektrotechnik GmbH
Hohentorshafen 17 - 19

2800 Bremen

Hans Meissner · Dipl.-Ing. (bis 1980)
Erich Bolte · Dipl.-Ing.*
Friedrich Möller · Dipl.-Ing.

BÜRO MÜNCHEN/MUNICH OFFICE:
Dr. Eugen Popp · Dipl.-Wirtsch.-Ing.*
Wolf E. Sajda · Dipl.-Phys.*
Dr. Johannes Bohnenberger · Dipl.-Ing.
Dr. Claus Reinländer · Dipl.-Ing.*

ANSCHRIFT/ADDRESS:      Telefon: (04 21) 34 20 19
Hollerallee 73          Telex: 246157 meibo d
D-2800 Bremen 1         Telefax: (04 21) 34 22 96

| Ihr Zeichen<br>Your ref. | Unser Zeichen<br>Our ref. ELE-30-EP | Datum<br>Date 28. Januar 1987/ 5621 |
|---|---|---|

Verfahren und Vorrichtung zur Übertragung der
Daten einer Spannungsquelle (Batterie)
auf eine Datenverarbeitungsanlage

A n s p r ü c h e :

1. Verfahren zur Übertragung der Daten einer Spannungsquelle (Batterie) auf eine Datenverarbeitungsanlage, d a d u r c h g e k e n n z e i c h n e t , daß gleichzeitig mit der Herstellung einer elektrischen Verbindung zwischen der Spannungsquelle (Batterie) und einer Speisestation bzw. einer Verbraucherstation die Datenübertragung ermöglicht wird.

2. Verfahren nach Anspruch 1, dadurch gekennzeichnet, daß die Datenübertragung kontaktlos erfolgt, insbesondere durch Funk- oder Lichtwellen, vorzugsweise mit Infrarot-Strahlung oder Ultraschall.

3. Verfahren nach Anspruch 1, dadurch gekennzeichnet, daß die Datenübertragung über physische Kontakte erfolgt.

4. Verfahren nach einem der Ansprüche 1 - 3, dadurch gekennzeichnet, daß die Datenübertragung digital-seriell erfolgt.

5. Verfahren nach einem der Ansprüche 1 oder 2 bzw. 4, dadurch gekennzeichnet, daß die Daten zunächst von einem Speicher in ein Schieberegister, von dem Schieberegister über eine Treiberstufe zu einer Infrarot-Leuchtdiode (IR-LED) und dann von dem IR-LED auf einen Fototransistor übertragen werden, wobei die Übertragung vom Speicher in das Schieberegister insbesondere parallel erfolgt.

6. Steckverbindung zur Übertragung (großer) elektrischer Leistungen, bestehend aus zwei Steckerteilen mit je einem Gehäuseteil und darin angeordneten Kontakten, insbesondere zur Durchführung eines Verfahrens nach Anspruch 1, gekennzeichnet durch ein an den Gehäuseteilen (13, 14) angeordnetes, insbesondere kontaktlos arbeitendes Datenübertragungsorgan (29).

7. Steckverbindung nach Anspruch 6, gekennzeichnet durch eine Datenübertragung mittels Funk- oder Lichtquellen, insbesondere Infrarot-Strahlung, oder Ultraschall.

8. Steckverbindung nach Anspruch 6 oder 7, dadurch gekennzeichnet, daß das Datenübertragungsorgan (29) aus einem Sendemodul bzw. einem Codierungsmodul (31) und einem Empfangsmodul (30) besteht, welche auf jeweils einer Seite der Steckverbindung (10) an den Gehäuseteilen (13, 14) angeordnet sind, zur Bildung einer Senderseite und einer Empfängerseite.

9. Steckverbindung nach einem der Ansprüche 6 - 8, dadurch gekennzeichnet, daß auf der Seite des Codierungsmoduls (31) eine Speichereinrichtung, vorzugsweise aus einem Speicher (39), einem Schieberegister (38), einem Quarz-Oszillator (36) und einem Teiler (37) sowie einer Treiberstufe (40) und einer Spannungsstabilisierung (42) bestehend, vorgesehen ist, deren Inhalt vom Codierungsmodul (31) bzw. vom Sendemodul kontaktlos an das Empfangsmodul (30) übertragbar ist.

10. Steckverbindung nach einem der Ansprüche 6 - 9, dadurch gekennzeichnet, daß das Sendemodul bzw. das Codierungsmodul (31) und/oder die Speichereinrichtung, insbesondere auf der Senderseite der Steckverbindung (10) mit einem Gehäuseteil (13) fest verbunden sind.

11. Steckverbindung nach einem der Ansprüche 6 - 10, dadurch gekennzeichnet, daß das Empfangsmodul (30) insbesondere auf der Empfängerseite der Steckverbindung (10) mit einem Gehäuseteil (14) fest verbunden ist.

12. Steckverbindung nach einem der Ansprüche 6 - 11, dadurch gekennzeichnet, daß das Sendemodul aus einer Infrarot-Leuchtdiode (IR-LED) (41) besteht.

13. Steckverbindung nach einem der Ansprüche 6 - 12, dadurch gekennzeichnet, daß die Speichereinrichtung und das Sendemodul integrale Bestandteile des Codierungsmoduls (31) sind.

14. Steckverbindung nach einem der Ansprüche 6 - 13, dadurch gekennzeichnet, daß das Codierungsmodul (31) seine Spannungsversorgung von einer an die Senderseite der Steckverbindung (10) angeschlossenen Spannungsquelle bezieht, insbesondere von einer Batterie.

C233638

15. Steckverbindung nach einem der Ansprüche 6 - 14, dadurch gekennzeichnet, daß das Empfangsmodul (30) einen Fototransistor (43) und einen Impedanzwandler (44) beinhaltet.

16. Steckverbindung nach einem der Ansprüche 6 - 15, dadurch gekennzeichnet, daß das Empfangsmodul (30) innerhalb eines Empfangsgehäuses (56) und das Sendemodul bzw. das Codierungsmodul (31) innerhalb eines Sendergehäuses (57) angeordnet sind.

17. Steckverbindung nach einem der Ansprüche 6 - 16, dadurch gekennzeichnet, daß die Gehäuseteile (13, 14) denen einer genormten Batterie-Ladegerät-Steckverbindung für Spannungen zwischen 24 und 80 Volt entsprechen.

18. Steckverbindung nach einem der Ansprüche 6 - 17, dadurch gekennzeichnet, daß das Codierungsmodul (31) und/oder dessen Sendergehäuse (57) sowie das Empfangsmodul (30) und/oder dessen Empfangsgehäuse (56) mit den jeweiligen Gehäuseteilen (13, 14) lösbar verbunden sind, insbesondere mittels an den Gehäuseteilen (13, 14) vorhandener Bohrungen mit denselben verschraubt sind.

19. Steckverbindung nach einem der Ansprüche 6- 18, dadurch gekennzeichnet, daß die Speichereinrichtung zusammen mit dem Quarz-Oszillator, dem Teiler und der Spannungsstabilisierung als Datenmodul einer Batterie am oder im Batterieblock angeordnet sind.

20. Steckverbindung nach einem der Ansprüche 6 - 19, dadurch gekennzeichnet, daß das Codierungsmodul (31) und das Empfangsmodul (30) mit korrespondierenden vorzugsweise steckbaren Kontakten zur Datenübertragung

0233638

und/oder mit zusätzlichen Kontakten zum Zweck der Spannungsversorgung des Codierungsmoduls (31) über das Empfangsmodul (30) versehen sind.


Meissner, Bolte & Partner

C233638

Fig. 1

Fig. 2

Fig. 3

Fig. 4

Fig. 5

0233638